# FASCICULE DE BREVET EUROPEEN

(11) **EP 0 755 106 B1**
(45) Date de publication et mention de la délivrance du brevet: **13.05.1998**
(21) Numéro de dépôt: 95401713.3
(22) Date de dépôt: 19.07.1995
(51) Int. Cl.: H02B 1/26, H01R 9/26

(54) **Dispositif de connexion latérale pour appareil électrique**
Seitliche Verbindungsvorrichtung für ein elektrisches Gerät
Lateral connection device for an electric apparatus

(43) Date de publication de la demande: 22.01.1997
(73) Titulaire: SCHNEIDER ELECTRIC SA, 92100 Boulogne Billancourt (FR)
(72) Inventeur: Larcher, Patrick, F-21000 Dijon (FR); Sinthomez, Daniel, F-21490 Pont de Pagny (FR)
(74) Mandataire: Carias, Alain

(56) Documents cités:
- EP-A- 0 514 295
- DE-U- 8 804 649
- FR-A- 2 504 610

## Description

La présente invention concerne un dispositif de connexion pour appareil électrique dont le boîtier présente une face latérale contre laquelle peut être appliqué latéralement un autre boîtier d'appareil électrique.

Un tel dispositif, connu d'après le brevet FR-2 676 586, comprend une partie femelle formant glissière et ménagée dans le boîtier de manière à déboucher sur sa face latérale, pour recevoir une pièce coulissante de connexion électrique et de liaison mécanique avec l'autre appareil. Il comprend aussi un élément fixe de connexion électrique associé à une borne de l'appareil et apparaissant au fond de la glissière.

Dans certaines applications, en particulier pour des contacteurs modulaires auxquels sont associables des additifs modulaires de commande, il est souhaitable de pouvoir disposer d'un sous-ensemble de connexion peu onéreux et commun aux divers calibres de la gamme de contacteurs.

L'invention a ainsi pour but de simplifier la réalisation d'une part d'un dispositif de connexion du type rappelé en introduction, d'autre part de divers appareils électriques à connexion latérale.

Selon l'invention, la partie femelle formant glissière est une pièce constituée par un plot en matière plastique rapporté, de préférence surmoulé, sur l'élément métallique de connexion de la borne de manière à constituer un sous-ensemble de connexion unitaire et le boîtier de l'appareil présente un logement qui s'ouvre sur la paroi latérale et dans lequel est maintenu le sous-ensemble de connexion.

Lorsque le boîtier de l'appareil se compose d'un socle et d'un capot ou couvercle, le logement du plot à glissière s'ouvre avantageusement sur le plan de jonction entre le socle et le capot.

La description va être faite ci-après, en regard des dessins et à titre d'exemple, d'un mode de réalisation non limitatif de l'invention.
- La figure 1 montre en élévation de face une vue schématique d'un contacteur auquel est accouplable un additif latéral.
- La figure 2 représente en perspective un contacteur muni du dispositif conforme à l'invention.
- La figure 3 est une coupe partielle agrandie du contacteur selon le plan P1 de la figure 2.
- La figure 4 représente en perspective le sous-ensemble surmoulé du dispositif.

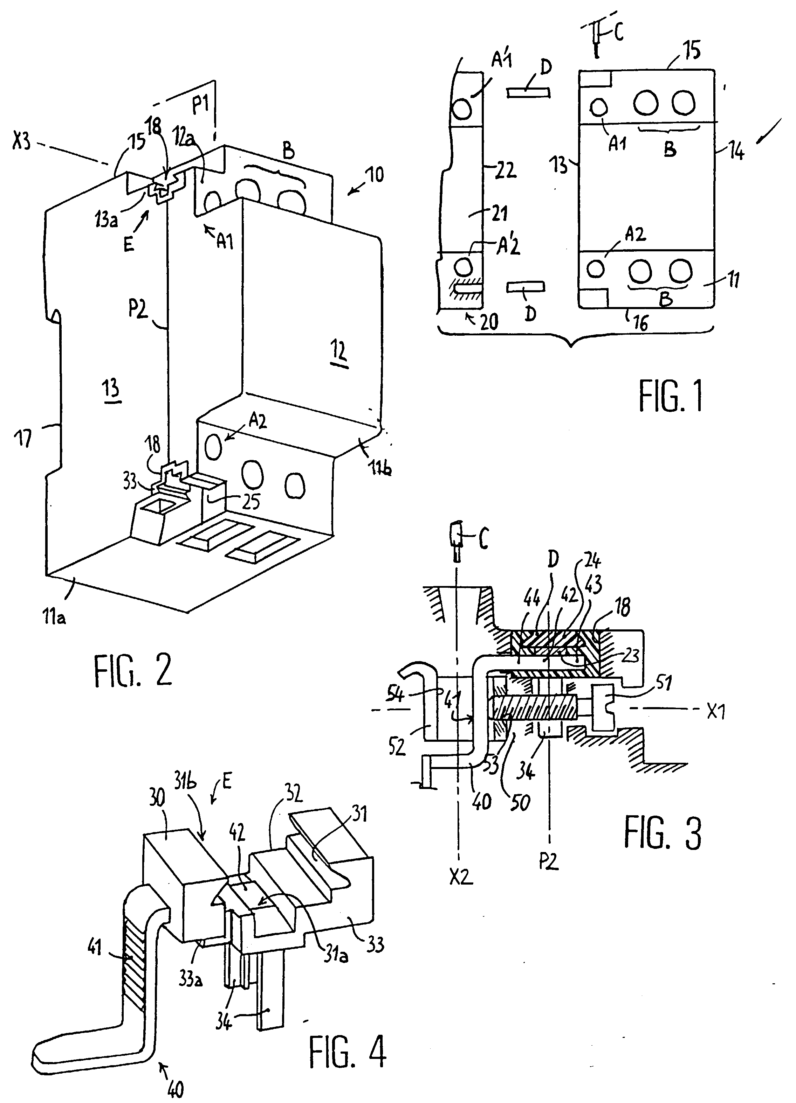

L'appareil électrique illustré sur les figures 1 et 2 est un contacteur 10 de type modulaire auquel est accouplable un appareil additif de commande 20. Le boîtier 11 du contacteur présente un certain nombre de faces ou parois : une paroi avant 12, des parois latérales 13,14, des parois supérieure 15 et inférieure 16 et une paroi arrière 17 par laquelle s'effectue la fixation ou le serrage sur un organe de support commun à l'appareil et à son additif.

Le boîtier loge une bobine d'électroaimant et des organes de contact commandés par l'électroaimant ; il comprend des bornes de commande A1,A2 auxquelles est connectée la bobine, ainsi que des bornes de puissance B auxquelles sont connectés les organes de contact. La bobine de l'électroaimant peut être alimentée soit par des conducteurs externes C que l'on introduit verticalement dans les bornes A1,A2, soit par des cavaliers D d'interconnexion électrique et d'assemblage mécanique avec l'additif 20, ces cavaliers devant être introduits horizontalement.

L'additif de commande 20 comprend un boîtier 21 dont la face latérale 22 peut venir s'appliquer contre la paroi latérale 13 du boîtier 11. Les cavaliers D sont par exemple du type décrit dans le brevet FR-2 676 586 au texte duquel il est utile de se référer. Ils comportent un pont métallique 23 (voir figure 3) pour assurer l'interconnexion entre une borne A'1,A'2 de l'additif et la borne A1,A2 du contacteur; ils comportent en outre une barrette isolante 24 recouvrant le pont et assurant après engagement dans des glissières respectives des deux boîtiers un ferme assemblage de ceux-ci.

Le dispositif de connexion E selon l'invention comprend d'une part une partie femelle 30 constituée par un plot à glissière en queue d'aronde 31 et d'autre part un élément fixe 40 de connexion électrique associé à la borne de commande A1,A2 du contacteur ; le plot servant de glissière au cavalier D est surmoulé sur l'élément de connexion 40. La borne A1,A2 comporte dans un logement 50 une vis 51 d'axe X1 perpendiculaire à la face avant 12 du boîtier et accessible par un orifice de cette face avant, ainsi qu'une cage de serrage 52 déplaçable en translation selon X1, par rotation de la vis dans un trou taraudé 53 ; la cage présente un fond 54, de manière qu'un conducteur C, introduit par une ouverture du boîtier selon une direction X2 perpendiculaire à X1, puisse être serré entre ce fond et une plage de serrage 41 propre à l'élément de connexion.

La glissière 31 du plot 30 est orientée selon une direction X3 perpendiculaire à X1 et X2 et à la paroi latérale 13. Le plot 30 est emboîté et/ou encliqueté dans un logement 18 du boîtier 11 du contacteur qui communique avec le logement 50 de la borne ; le logement 18, qui est ouvert vers la paroi 13 et vers le haut ou vers le bas, s'ouvre aussi sur le plan P2 de joint entre deux parties du boîtier 11, par exemple un socle 11a et un capot ou couvercle 11b, ce qui facilite le montage de l'appareil. Le plot 30 présente d'un côté une paroi latérale 32 en butée contre une face latérale 25 du boîtier 11 du contacteur et de l'autre côté une paroi latérale 33 située dans le plan de la paroi latérale 13 du boîtier. Différentes conformations d'encastrement ou d'emboîtement dans le boîtier 11 sont prévues sur la pièce 30 ; un retrait 33a est prévu dans la paroi 33 pour recevoir une avancée 13a de la paroi 13 ; deux pattes ou autres formes analogues de maintien 34 sont formées sous la glissière 31 selon la direction X2 pour encadrer la vis 51 (figures 3 et 4) et être retenues dans le boîtier.

L'élément de connexion 40 est une pièce métallique rigide obtenue par pliage, cette pièce comprenant outre la plage de serrage 41 une plage de contact 42 entourée par deux plages 43,44 surmoulées par le plot (figure 3). La plage de contact 42 apparaît dans un retrait 31a de la rainure en queue d'aronde 31 au fond de celle-ci c'est-à-dire à l'opposé de l'ouverture 31b que cette rainure présente vers le haut ou le bas du boîtier 11 du contacteur. On notera que la paroi avant 12 du contacteur présente une aile latérale 12a qui masque le plot 30 et son logement 18. L'élément de connexion pourrait en variante comporter une partie souple.

Le sous-ensemble de connexion E constitué par le plot 30 et l'élément de connexion 40 reste avantageusement le même pour les divers contacteurs d'une gamme. Il convient de remarquer qu'un cache peut facilement être encastré à la place du plot 30 dans le logement 18 pour les contacteurs dépourvus du mode décrit de connexion latérale à un additif. L'invention, décrite pour un contacteur et son additif de commande latérale, peut bien entendu être appliquée à d'autres appareils électriques accouplables latéralement. Des dispositions complémentaires des cavaliers décrits peuvent être prévues pour renforcer l'assemblage mécanique des boîtiers accouplés.

## Revendications

1. Dispositif de connexion latérale pour appareil électrique dont le boîtier présente une paroi latérale contre laquelle est applicable un autre boîtier d'appareil électrique, le dispositif comprenant :
- une partie femelle formant glissière et ménagée dans le boîtier de manière à déboucher sur la paroi latérale et à recevoir une pièce coulissante de connexion électrique et de liaison mécanique avec l'autre appareil,
- un élément fixe de connexion électrique apparaissant dans la partie femelle et associé à une borne de l'appareil,
caractérisé par le fait que
- la partie femelle est un plot (30) en matière plastique rapporté sur l'élément de connexion (40) de la borne (A1,A2) de manière à constituer un sous-ensemble de connexion unitaire et
- le boîtier (11) de l'appareil présente un logement 18 qui s'ouvre sur la paroi latérale (13) et dans lequel est maintenu le sous-ensemble de connexion (30,40).

2. Dispositif selon la revendication 1, caractérisé par le fait que le plot (30) est surmoulé sur l'élément de connexion (40) qui comprend une plage de contact (42) et des plages surmoulées (43,44), la plage de contact étant apparente dans un retrait du plot (30) et située entre les plages surmoulées.

3. Dispositif selon la revendication 1, caractérisé par le fait que le logement (18) du plot (30) s'ouvre vers le haut ou le bas du boîtier (11) de l'appareil, le boîtier comprenant une paroi avant (12) vers laquelle s'ouvre la borne (A1,A2) associée au dispositif de connexion, la paroi avant présentant une aile latérale (12a) masquant le logement (18).

4. Dispositif selon la revendication 1, caractérisé par le fait que le boîtier (11) de l'appareil comprend deux parties (11a,11b), le logement (18) du plot (30) s'ouvrant sur le plan (P2) de joint entre ces deux parties.

5. Dispositif selon la revendication 1, caractérisé par le fait que la borne (A1,A2) de l'appareil est une borne à vis et que le plot (30) comporte des formes de maintien (34) proches de l'axe de la vis (50).

## Patentansprüche

1. Seitliche Anschlußvorrichtung für ein elektrisches Gerät, dessen Gehäuse eine Seitenwand aufweist, gegen die sich ein Gehäuse eines anderen elektrischen Geräts abdrücken kann, wobei die Vorrichtung:
- einen eine Gleitschiene bildenden Teil umfaßt, der so im Gehäuse angeordnet ist, daß er an der Seitenwand mündet und ein elektrisches, gleitendes Anschluß- und mechanisches Verbindungsteil mit dem anderen Gerät aufnehmen kann, sowie
- ein festes elektrisches Anschlußelement, das am Boden der Gleitschiene angeordnet und einer Klemme des Geräts zugeordnet ist,
dadurch gekennzeichnet, daß
- der Teil ein auf dem Anschlußelement (40) angesetzter Plastikklotz (30) ist, um eine einzige Anschluß-Unterbaugruppe zu bilden, und
- das Gehäuse (11) des Geräts eine Aufnahme 18 aufweist, die sich zur seitlichen Wand (13) hin öffnet, und in der die Anschluß-Unterbaugruppe (30,40) festgehalten wird.

2. Vorrichtung nach Anspruch 1, dadurch gekennzeichnet, daß der Klotz (30) auf dem Anschlußelement (40) angeformt ist, das einen Kontaktbereich (42) und angeformte Bereiche (43,44) umfaßt, wobei der Kontaktbereich in einem Rücksprung des Klotzes (30) erscheint und sich zwischen den angeformten Bereichen befindet.

3. Vorrichtung nach Anspruch 1, dadurch gekennzeichnet, daß sich die Aufnahme (18) des Klotzes (30) nach oben oder unten des Gehäuses (11) des Geräts hin öffnet, wobei das Gehäuse eine Vorderwand (12) umfaßt, zu der hin sich die der Anschlußvorrichtung zugeordnete Klemme (A1, A2) öffnet, wobei die Vorderseite einen seitlichen Flügel (12a) aufweist, der die Aufnahme (18) maskiert.

4. Vorrichtung nach Anspruch 1, dadurch gekennzeichnet, daß das Gehäuse (11) des Geräts zwei Teile (11a, 11b) umfaßt, wobei sich die Aufnahme (18) des Klotzes (30) zur Teilungsebene (P2) zwischen diesen beiden Teilen öffnet.

5. Vorrichtung nach Anspruch 1, dadurch gekennzeichnet, daß die Klemme (A1, A2) des Geräts eine Schraubklemme ist, und daß der Klotz (30) in der Nähe der Achse der Schraube (50) Halteformen (34) umfaßt.

## Claims

1. Lateral connection device for an electric apparatus in a box which has a side wall against which another electric apparatus box is applied, the device comprising:
- a female part forming a slide formed in the box opening onto the side wall and containing a sliding electrical connection part and a mechanical link with another apparatus;
- a fixed electrical connection element appearing in the female part and associated with a terminal of the apparatus;
characterized in that:
- the female part is a plastic stud (30) added onto the connection element (40) of the terminal (A1, A2) to form a subassembly of the unit connection and
- the box (11) of the apparatus has a recess, (18) that opens on the side wall (13) and which contains the connection subassembly (30, 40).

2. Device according to claim 1, characterized in that the stud (30) is insert molded on the connection element (40) that comprises a contact strip (42) and insert molded strips (43, 44), the contact strip being visible in a setback of the stud (30) and located between the insert molded strips.

3. Device according to claim 1, characterized in that the stud (30) housing (18) opens upwards or downwards in the box (11) in the apparatus, the box comprising a front surface (12) towards which the terminal (Al, A2) associated with the connection device opens, the front surface presenting a side piece (12a) concealing the housing (18).

4. Device according to claim 1, characterized in that the box (11) of the apparatus comprises two parts (11a, 11b), the housing (18) of the stud (30) opening onto the joint plane (P2) between these two parts.

5. Device according to claim 1, characterized in that the apparatus terminal (A1, A2) is a screw terminal and the stud (30) comprises support shapes (34) close to the centerline of the screw (50).
